# EUROPÄISCHE PATENTSCHRIFT

(11) **EP 1 342 632 B1**
(45) Veröffentlichungstag und Bekanntmachung des Hinweises auf die Patenterteilung: **11.01.2006**
(21) Anmeldenummer: 02004842.7
(22) Anmeldetag: 04.03.2002
(51) Int. Cl.: B60T 1/00

(54) **Parksperreneinrichtung für Kraftfahrzeuge mit Automatikgetriebe**
Parking lock device for vehicles with automatic transmission
Bloquage de stationnement d'un véhichule avec transmission automatique

(43) Veröffentlichungstag der Anmeldung: 10.09.2003
(73) Patentinhaber: Ford Global Technologies, LLC, Dearborn, MI 48126 (US)
(72) Erfinder: Premiski, Vladimir, 33950 Lege Cap Ferret (FR)
(74) Vertreter: Drömer, Hans-Carsten

(56) Entgegenhaltungen:
- EP-A- 0 393 629
- EP-A- 0 891 902
- WO-A-99/61296
- US-A- 5 695 030
- US-A- 5 879 111
- US-B1- 6 250 433
- US-B1- 6 341 671

## Beschreibung

Die Erfindung bezieht sich auf eine Parksperreinrichtung für Automatikgetriebe eines Fahrzeugs mit einem Parkrad mit Rücksprüngen am Außenumfang, einem Sperrelement, das in Parkposition federbelastet ist und in dieser Parkposition in die Rücksprünge des Parkrads formschlüssig eingreift, und eine translatorische Stelleinrichtung, durch welche das Sperrelement entgegen der Federbelastung bewegbar ist.

Bislang sind für Parksperreinrichtungen automatischer Getriebe nur Systeme zum Einsatz gekommen, bei welchen ein gezahntes Parkrad mittels einer Parkklinke oder Klaue, die in eine Zahnlücke eingreift, in einer Parkposition gehalten wird.

Aus der US 6250433 ist eine Parksperre bekannt, bei der ein zylindrisches Sperrelement federbelastet translatorisch in die halbkreisförmigen Aussparungen eines Parkrades verschoben wird, wodurch die Parksperre verriegelt ist. Das Sperrelement ist mit einer Verstelleinrichtung gekoppelt, die mittels eines hydraulischen Verstellzylinders das Sperrelement aus des Aussparungen verschiebt und damit die Parksperre entriegelt. Nachteilig ist hier, daß große Entriegelungskräfte notwendig sind, wenn die Sperrelement unter Last des Parkrades steht. Weiterhin kann das Sperrelement sowohl beim Ver- als auch beim Entriegeln der Parksperre beschädigt werden, insbesondere wenn das Sperrelement sich nur noch teilweise im Eingriff im Parkrad befindet.

Aus der DE-4127991 A1 ist eine Parksperreinrichtung für automatische Getriebe von Kraftfahrzeugen mit einem durch einen Handwählhebel schaltbaren Parksperrenmechanismus bekannt, bestehend aus einer im wesentlichen axial in eine geschlossene und eine offene Parkposition verschiebbare Betätigungsstange, die mit einer Parkklinke und einem gezahnten Parkrad zusammenwirkt und die im Getriebegehäuse angeordnet sind, wobei die Betätigungsstange gleichzeitig die Kolbenstange eines ebenfalls im Inneren des Getriebegehäuses angeordneten einfach wirkenden Zylinders ist, der in drucklosem Zustand die Betätigungsstange vorgeschoben, also die Parksperre über eine Feder geschlossen hält und bei Druckbeaufschlagung diese öffnet. Der Nachteil derartiger mechanischer Parksperreinrichtungen ist, dass diese aufgrund des Zusammenwirkens von Parkklinke und gezahntem Parkrad genaue Fertigungstoleranzen erfordern und daher aufwendig und kostenintensiv in der Herstellung sind.

Dies Vorrichtung genügt auch nicht erhöhten Komfortansprüchen der Käufer. Ein System, welches den Fahrer in der Handhabung unterstützt und z.B. alle Schaltungen durch elektronisch gesteuerte Signale einleitet ist nicht offenbart oder offensichtlich nur schwierig zu implantieren.

Aus der US-A-5,827,149 ist eine elektronisch betätigbare Parksperreinrichtung für Automatikgetriebe mit einer Mehrzahl von Gängen, einer Schalteinrichtung für ein Umschalten zwischen den Gängen; einer Abtriebswelle und einer Sperrvorrichtung. Die Sperrvorrichtung kann bewegt werden zwischen einer ersten Position, in welcher die Sperrvorrichtung eine Rotationsbewegung der Abtriebswelle verhindert, und einer zweiten Position, in welcher eine Rotationsbewegung nicht verhindert ist, wobei der Antrieb für die Sperreinrichtung mechanisch unabhängig von der Schalteinrichtung ist und eine elektronische Antriebsvorrichtung für eine Bewegung der Sperrvorrichtung zwischen der ersten und der zweiten Position besitzt. Als Sperrvorrichtung ist eine Klaue vorgesehen, welche durch ein von zwei Elektromotoren angetriebenes Schneckengetriebe zwischen der ersten und der zweiten Position bewegt wird. Ein derartiger elektronischer Antrieb der Parksperre hat verschiedene Nachteile. Zum Einen muss der Sicherheitsfaktor beim Ausfall der Fahrzeugenergie berücksichtigt werden, im US-A- 5,827,149 ist zu diesem Zweck eine Ersatzbatterie vorgesehenen, die bei Ausfall der Fahrzeugenergie zum Einsatz kommt. Ein weiterer Nachteil ist die Tatsache, dass zusätzliche Elemente, die Ersatzbatterie, die zwei Elektromotoren, ein Schneckengetriebe und die Parkklaue hohe Kosten und Gewicht verursachen.

Aus der US-A- 5,794,748 ist eine weitere Parksperreinrichtung für Automatikgetriebe bekannt. Der Mechanismus beruht ebenfalls auf dem bekannten Prinzip des Klinkenrad/Sperrklinken-Systems mit einer federbelasteten Klinke. Entgegen der Federbelastung ist die Klinke in eine Position bewegbar, in welcher sie in dem drehfest gelagerten als Klinkenrad ausgebildeten Parkrad derart einrastet, dass eine Rotationsbewegung gesperrt ist. Die Bewegung der Klinke erfolgt mittels einer Betätigungsstange, welche in dem Gehäuse longitudinal verschiebbar gelagert ist. Die Position der Betätigungsstange ist aufgrund des eingelegten Getriebegangs bestimmt und über eine Blattfeder fixiert. Nachteil ist auch bei diesem Mechanismus der hohe Fertigungsaufwand und die damit verbundenen hohen Kosten.

Ein weiterer Nachteil der bekannten Klinkenrad/Sperrklinken-Systeme ist die formbedingte geringe Festigkeit der Bauteile, sodass die Sicherheit des Systems aufgrund von Bruch oder Alterung gefährdet ist oder deren Verschleiß oder Lagesicherheit wegen der Möglichkeit des Abgleitens der Teile aus ihrer Sollposition wegen der komplementären schrägen Flankengeometrien, z. B. unter hoher Last bei einem LKW auf abschüssiger Strasse nicht auszuschließen ist.

Der Erfindung liegt daher das Problem zugrunde, eine Parksperreinrichtung für Kraftfahrzeuge mit Automatikgetriebe zu schaffen, welche robust bezüglich ihrer Funktion und der Fertigungstoleranzen ihrer Komponenten ist und somit sowohl kostengünstig herstellbar ist, als auch die bekannten Nachteile der Klinkenrad/Sperrklinken-Systeme vermeidet.

Die Lösung des Problems ergibt sich durch den Gegenstand mit den Merkmalen des Anspruchs 1. Vorteilhafte Weiterbildungen der Erfindung sind in den abhängigen Ansprüchen erfasst.

Die erfindungsgemäße Parksperreinrichtung für Kraftfahrzeuge mit Automatikgetriebe umfasst mindestens ein Parkrad mit bevorzugt kreisbogenförmig ausgebildeten Rücksprüngen am Außenumfang, ein als Parkstange ausgebildetes Sperrelement, das in Parkposition in die Rücksprünge des Parkrads formschlüssig eingreift und in dieser Parkposition durch die Kraft einer Feder gehalten wird, und eine Stelleinrichtung, welche auf die Parkstange eine elektronisch regel -und/oder steuerbare Kraft aufbringt und so die Parkstange entgegen der Federbelastung bewegt. Die Parkstange ist mit mindestens zwei Enden ausgebildet ist, wobei das eine Ende an die Stelleinrichtung für die Übertragung von Kräften und/oder Bewegungen mechanisch wirksam gekoppelt ist. Das andere Ende ist in dem Gehäuse des Automatikgetriebes gelagert ist. Die Lagerung ist bevorzugt mit einer Buchse ausgebildet, durch welche nur geringe Reibkräfte der translatorischen Bewegung der Parkstange entgegen wirken. Die Parkstange ist im wesentlichen zwischen der Parkposition und mindestens einer zweiten Position translatorisch verschiebbar ist, wobei in der zweiten Position die Parkstange ohne Formschluß zu dem Parkrad ist.

Die Stelleinrichtung benötigt keine zusätzliche Aktorik für ein Verschieben der Parkstange in die Parkposition und ist daher robust gegen Störungen.

Die Gestalt der eingesetzten Komponenten kann einfach gewählt werden, wodurch eine kostengünstige Herstellung möglich ist. Insbesondere die Form der Rücksprünge kann hierbei unter fertigungstechnischen Aspekten optimiert werden. Einfache Drehkörper werden bevorzugt; bei Bedarf können nach dem Erfindungsprinzip aber auch sechseckige oder andere Konturen für Parkstangen und Nuten verwendet werden

In einer Ausführungsform weist die Parkstange mindestens zwei Durchmesser auf. Das Parkrad ist mit einem Spezialprofil ausgebildet, wobei am Außendurchmesser bogenförmige Nuten eingearbeitet sind, deren Durchmesser dem größeren Durchmesser der Parkstange entsprechen. Dadurch lässt sich die wirksame Verbindung zwischen Parkstange und Parkrad stabil und einfach bilden und lösen. Das Spezialprofil ist ohne enge Fertigungstoleranzen einfach und kostengünstig herstellbar. Der Übergang zwischen den beiden Durchmessern der Parkstange ist zweckmäßigerweise kegelförmig ausgebildet. Dadurch wird das Bilden und Lösen der Verbindung unterstützt. Es können die Parkstange und die zugehörigen Nuten aber auch insgesamt kegelförmig oder pyramidenförmig gestaltet sein.

Die Kraftbeaufschlagung der Parkstange durch die Stelleinrichtung kann beispielsweise elektromagnetisch, piezoelektrisch oder durch ein Druckmittel erfolgen. Wobei für ein Aufbringen des Druckmittels bevorzugt ein Druckzylinder verwendet wird.

In einer Ausführungsform ist die Parkstange gleichzeitig Kolbenstange dieses Druckzylinders, welcher mit einer Druckhülse und einer Druckscheibe ausgebildet ist, wobei die Druckscheibe mit dem zweiten Ende der Parkstange fest verbunden ist, und die Feder in der Druckhülse gelagert ist. Durch diese Anordnung ist eine stabil geführte translatorische Bewegung der Parkstange aufgrund der angreifenden Kräfte einfach realisierbar. Ohne zusätzliche Druckbeaufschlagung des Druckzylinder wird die Parkstange durch die Feder in der Parkposition gehalten. Durch eine Druckbeaufschlagung des Zylinders wird die Parkstangen entgegen der Federkraft in eine zweite Position verschoben. In dieser Position ist die mechanische Verbindung zwischen Parkstange und Parkrad gelöst. Als Druckmittel wird vorzugsweise ein handelsübliches Öl, z.B. Getriebeöl, verwendet, jedoch kann der Zylinder auch an das Bremsflüssigkeitssystem gekoppelt sein. Für bestimmte Fahrzeuge ist auch bei diesen oder anderen Beispielen Luft als Druckmittel denkbar, diese Ausführungsform wird jedoch wegen möglicher Leckagen und/oder geringer Drücke nicht bevorzugt.

In einer weiteren Ausführungsform kann die Druckhülse mit einer Drossel ausgebildet sein. Dadurch ist die Schwingung beim Bilden und Lösen der wirksamen Verbindung zwischen Parkstange und Parkrad gedämpft.

In einer weiteren Ausführungsform ist als Druckzylinder ein hydraulischer Druckzylinder gewählt. Die Kraftbeaufschlagung durch ein hydraulisches Druckmittel ist von Vorteil, da das hydraulische Druckmittel bei Automatikgetrieben bereits vorhanden ist. Die hydraulische Druckmittelzufuhr des Druckzylinders erfolgt über einen Kanal, wobei der Druck in dem Kanal nur über einen zum Verschieben der Parkstange entgegen der Wirkungsrichtung der Feder notwendigen Druck steigen kann, wenn der Motor läuft und die Ölpumpe ausreichend Druck liefert. Somit ist auch das Fahrzeug nur rollbar, wenn der Motor läuft und die Ölpumpe ausreichend Druck liefert. Dadurch ist eine zusätzliche Diebstahlsicherung gegeben. Das Bilden der wirksamen Verbindung zwischen Parkstange und Parkrad ist möglich, wenn der Druck unter ein Minimum fällt. Der Motor muss sich dafür im Leerlauf befinden und die Fahrzeuggeschwindigkeit nahezu null sein. Die Druckversorgung der Parkeinrichtung ist durch einen Bordcomputer geregelt. Die Parkeinrichtung ist dadurch vollkommen elektronisch steuerbar. Dadurch entsteht ein weiterer enormer Kostenvorteil.

Durch den Bordcomputer oder zusätzliche elektronische Einrichtungen ist zudem sichergestellt, dass die Parkeinrichtung nur in Stellung 'Park' (oder 'P') nicht aber in einem der anderen Gänge und/oder den anderen Stellungen des Gang-Wahlhebels wirksam werden kann. Dies dient der Sicherheit, damit nicht bei unbeabsichtigten Motorausfall die Sperre eingreifen kann und das Fahrzeug bewegbar bleibt. Dies könnte lebenswichtig sein, um z.B. einen Bahnübergang bei havariertem Fahrzeug zu räumen.

In einer Ausführungsform schließt das im Gehäuse gelagerte Ende der Parkstange an einen exzentrischen Bolzen an. Durch eine Drehung des Bolzens ist die Parkstange entgegen der Wirkrichtung der Feder verschiebbar. Dadurch kann die Parkeinrichtung im Fall, dass Motor und/oder Ölpumpe defekt sind, mechanisch gelöst werden. Diese Ausführung ist für Reparaturzwecke sinnvoll, oder wenn das Fahrzeug abgeschleppt werden soll. Dabei kann der Bolzen am Getriebe so angeordnet sein, dass der Bolzen auch vom Fahrgastraum des Fahrzeuges aus bedient werden kann.

In einer weiteren Ausführungsform ist der Kopf des exzentrischen Bolzens mit einer Spezialform ausgebildet, so dass eine manuelle Betätigung nur mit einem Spezialschlüssel durch autorisierte Personen erfolgen kann.

Die Erfindung wird nachfolgend anhand von Ausführungsbeispielen in Verbindung mit schematischen Zeichnungen näher erläutert. Es zeigen:
- Fig. 1: schematisch eine Parkstange und einen Druckzylinder,
- Fig. 2: schematisch ein Automatikgetriebe mit Parkeinrichtung,
- Fig.3: eine Draufsicht auf die Parkstange und ein Parkrad der Parkeinrichtung.

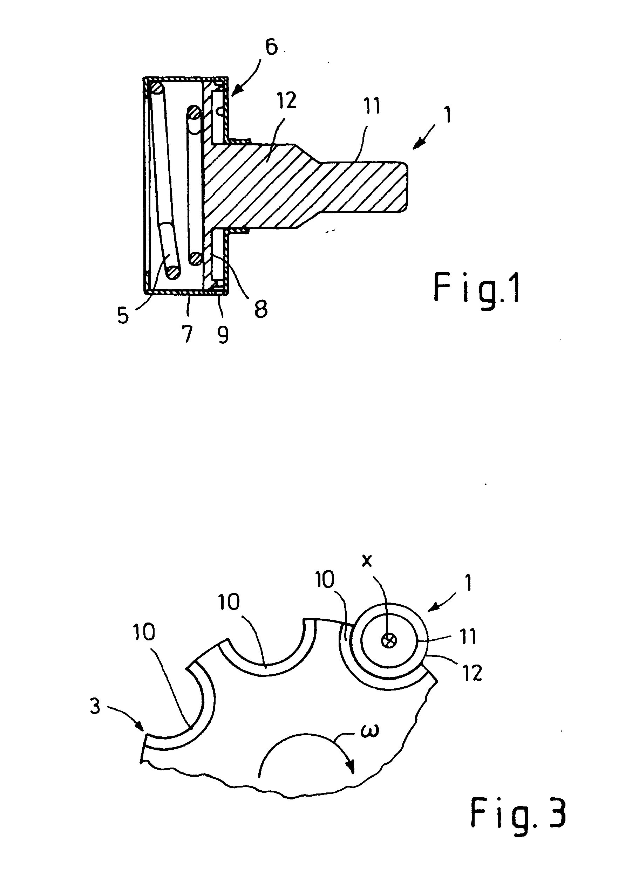

Fig. 1 zeigt eine schematische Darstellung eines Druckzylinders 6 und einer Parkstange 1 einer erfindungsgemäßen Parkeinrichtung. Der Druckzylinder 6 ist mit einer Druckhülse 7 und einer Druckscheibe 8 ausgebildet. Ein Ende 12 der Parkstange 1 ist fest mit der Druckscheibe 8 verbunden. Die Parkstange 1 weist an ihren zwei Enden 11, 12 unterschiedliche Durchmesser auf, wobei das freie Ende 11 mit einem kleineren Durchmesser und das anderen Ende 12 mit einem größeren Durchmesser ausgebildet ist. In der Druckhülse 7 ist eine Feder 5 gelagert. Beispielhaft ist die Feder 5 als mechanische Schraubenfeder gezeigt. Denkbar ist jedoch auch der Einsatz eines Gummipuffers oder anderer elastischer Elemente. Die Belastung des Druckzylinders durch ein Druckmittel erfolgt auf der Seite der Druckscheibe 8, welche der Parkstange zugewandt ist. Aufgrund der Druckmittelbelastung ist die Druckscheibe 8 und damit die Parkstange 1 entgegen der Kraft der Feder 5 translatorisch bewegbar. Durch die Druckhülse 7 wird auch die Führung der Parkstange 1 während der translatorischen Bewegung unterstützt.

Das Ende 12 der Parkstange 1 ist mit der Druckscheibe 8 fest verbunden. Die Feder 5 ist in der Druckhülse 7 gelagert. Durch diese Ausführung ist eine stabile Führung der translatorischen Bewegung der Parkstange gewährleistet.

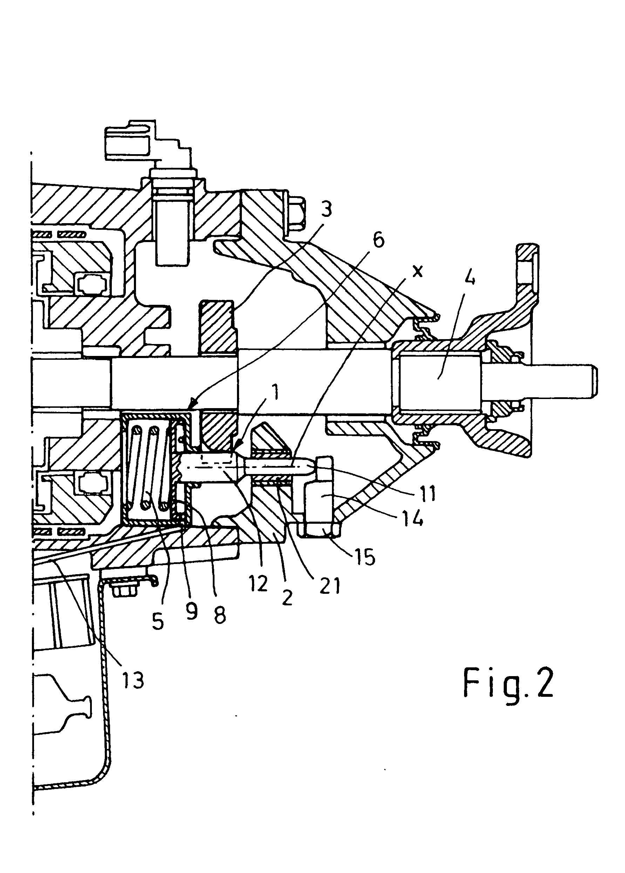

Fig. 2 zeigt schematisch die Anordnung der Parkeinrichtung in einem Fahrzeug mit Automatikgetriebe, umfassend die bereits in Fig. 1 gezeigten Elemente und ein Parkrad 3, welches drehfest mit der Abtriebswelle 4 des Fahrzeugs verbunden ist. Die Parkstange 1 ist an dem ihrem freien Ende 11 in einer Buchse 21 oder einem Auge im Gehäuse 2 drehbar und translatorisch verschiebbar gelagert.

Durch die Kraft der Feder 5 wird die Parkstange 1 in einer ersten Position, der dargestellten Parkposition, gehalten. In dieser Position ist eine wirksame Verbindung zwischen der Parkstange 1 und dem Parkrad 3 hergestellt. Dadurch ist eine Drehung des Parkrads 3 und damit der Abtriebswelle 4 des Fahrzeugs verhindert. Über einen Kanal 13 ist dem Druckzylinder 6 bevorzugt ein hydraulisches Druckmittel zuführbar. Die Steifigkeit der Feder 5 ist dabei derart ausgelegt, dass bei laufendem Motor und ausreichender Drucklieferung durch eine nicht dargestellte Ölpumpe die Parkstange 1 entgegen der Kraft der Feder 5 translatorisch in eine zweite Position verschiebbar und damit aus der Parkposition entriegelbar ist. Dadurch wird die wirksame Verbindung zwischen der Parkstange 1 und dem Parkrad 3 gelöst.

Der Kontaktzustandswechsel beim Bilden und Lösen der wirksamen Verbindung zwischen Parkstange 1 und Parkrad 3 führt zu einer Schwingungsanregung. Die Druckhülse 7 des Druckzylinders 6 ist daher mit einer Drossel 9 ausgebildet, um die entstehenden Schwingungen zu dämpfen.

Die Druckversorgung des Druckzylinders 6 durch den Druckkanal 13 erfolgt nur in den Gängen R-N-D-1-2-3 (Rückwärts, Leerlauf, Dauerstellung, 1-3 Gangstufen), nicht jedoch in P (Parkstellung). Ohne Druckversorgung wird die Parkstange 1 aufgrund der wirksamen Federkraft der Feder 5 in der Parkposition gehalten. Um bei defektem Motor und/oder defekter Ölpumpe die Parkeinrichtung dennoch lösen zu können, ist ein exzentrischer Bolzen 14 vorgesehen. Dieser kann mit einem speziellen Kopf 15 ausgebildet sein, sodass eine manuelle Betätigung nur durch autorisierte Personen, beispielsweise den Besitzer und/oder einen Fahrzeughändler, möglich ist. Bei Drehung des Kopfes 15 in Pfeilrichtung L drückt der Bolzen 14 die Parkstange 1 an dem Ende 11 gegen die Feder 5 in die entriegelte zweite Position, so dass die Parksperre gelöst ist.

Fig. 3 zeigt schematisch eine Draufsicht auf das Parkrad 3 und die Parkstange 1. Das Parkrad ist mit bogenförmigen Nuten 10 ausgebildet, deren Durchmesser dem größeren Durchmesser des Endes 12 der Parkstange 1 entsprechen. Die Anzahl der Nuten 10 ergibt sich unter anderem aus dem Umfangsdurchmesser des Parkrads 3. Durch eine erhöhte Anzahl an Nuten 10 steigt der Handhabungskomfort, da die Abhängigkeit von einer bestimmten Position des Parkrads 3 sinkt. Allerdings ist eine Materialschwächung des Parkrads 3 aufgrund zu geringer Stege zwischen den Nuten 10 zu vermeiden. Das Einlegen der Parkstange 1 in die Nuten 10 des Parkrads 3 wird zudem durch eine Schräge im Übergang zwischen den unterschiedlichen Durchmessern der Enden 11,12 unterstützt.

Durch diese einfache Form ist nur eine geringe Fertigungstoleranz bei der Herstellung des Parkrads 3 erforderlich. In der Parkposition ist das Ende 12 der Parkstange 1 im Eingriff mit dem Parkrad 3, wodurch eine Drehbewegung ω des Parkrads 3 verhindert wird. Die Anordnung der Parkstange 1 und des Parkrads 3 erfolgt derart, dass durch eine translatorische Verschiebung der Parkstange 1 in Richtung ihrer Achse x in die zweite Position keine mechanische Verbindung zwischen dem Parkrad 3 und der Parkstange 1 besteht, da das Ende 11 der Parkstange 1 nicht mit den Nuten 10 formschlüssig sein kann. Die Drehbewegung des Parkrads 3 ist so in dieser Stellung nicht durch die Parkstange 1 behindert.

## Patentansprüche

1. Parksperreinrichtung für Automatikgetriebe eines Fahrzeugs umfassend ein Parkrad (3) mit Rücksprüngen am Außenumfang, ein Sperrelement (1), das in Parkposition federbelastet ist und in dieser Parkposition in die Rücksprünge (10) des Parkrads formschlüssig eingreift, und eine translatorische stelleinrichtung (6), durch welche das Sperrelement (1) entgegen der Federbelastung bewegbar ist,
**dadurch gekennzeichnet, dass**
das Sperrelement als Parkstange (1) mit mindestens zwei Enden (11,12) ausgebildet ist und mit einem ersten Ende (11) in einem Gehäuse (2) gelagert und mit dem weiteren Ende (12) an die Stelleinrichtung (6-9) fest gekoppelt ist,
die Parkstange (1) im wesentlichen zwischen der Parkposition und mindestens einer zweiten Position translatorisch verschiebbar ist, wobei in der zweiten Position die Parkstange (1) ohne Formschluß zu dem Parkrad (3) ist, und
die Stelleinrichtung (6-9) auf die Parkstange (1) eine elektronisch regel- und/oder steuerbare Kraft aufbringt.

2. Parksperreinrichtung nach Anspruch 1, **dadurch gekennzeichnet, dass** die zwei Enden der Parkstange (1) mit mindestens zwei Durchmessern ausgebildet sind, und die Rücksprünge am Außenumfang des Parkrads (3) als bogenförmige Nuten (10) ausgebildet sind, deren Durchmesser etwa komplementär zum größeren Durchmesser der Parkstange (1) sind.

3. Parksperreinrichtung nach Anspruch 1 oder 2, **dadurch gekennzeichnet, dass** die Parkstange (1) Kolbenstange ist und somit Teil der Stelleinrichtung, umfassend einen Druckzylinders (6) mit einer Druckhülse (7) und einer Druckscheibe (8), wobei die Druckscheibe (8) mit dem zweiten Ende (12) der Parkstange (1) fest verbunden ist, und eine Feder (5) in der Druckhülse (7) gelagert ist.

4. Parksperreinrichtung nach Anspruch 3, **dadurch gekennzeichnet, dass** die Druckhülse (7) mit einer Drossel (9) ausgebildet ist.

5. Parksperreinrichtung nach Anspruch 3 oder 4, **dadurch gekennzeichnet, dass** der Druckzylinder (6) als ein hydraulischer Druckzylinder ausgebildet ist, die hydraulische Druckmittelzufuhr des Druckzylinders (6) über einen Kanal (13) erfolgt, der Druck in dem Kanal (13) nur über einen zum Verschieben der Parkstange (1) entgegen der Wirkungsrichtung der Feder (5) notwendigen Druck steigen kann, wenn der Motor läuft und die Ölpumpe ausreichend Druck liefert, und die hydraulische Druckmittelzufuhr des Druckzylinders (6) elektronisch regelbar ist.

6. Parksperreinrichtung nach einem der vorangegangenen Ansprüchen, **gekennzeichnet durch** einen Bordcomputer zur elektronische Regelung der entgegen der Wirkungsrichtung der Feder (5) auf die Parkstange (1) wirkenden Kraft.

7. Parksperreinrichtung nach einem der vorangegangenen Ansprüchen, **dadurch gekennzeichnet, dass** das erste Ende (11) der Parkstange (1) im Gehäuse (2) durch einen exzentrischen Bolzen (14) manuell translatorisch verstellbar ausgebildet ist.

8. Parksperreinrichtung nach Anspruch 7, **dadurch gekennzeichnet, dass** der Bolzen (14) mit einem nur durch Spezialwerkzeug bedienbaren Kopf (15) ausgebildet ist.

9. Parksperreinrichtung nach Anspruch 7 oder 8, **dadurch gekennzeichnet, dass** der Bolzen (14) vom Fahrgastraum des Fahrzeuges aus bedienbar ist.

## Claims

1. Parking lock device for an automatic transmission of a vehicle comprising a parking wheel (3) with recesses on the external circumference, a locking element (1) which is spring-loaded in the parked position and engages in a positively locking fashion in the recesses (10) in the parking wheel in this parked position, and a translatory actuating device (6) by means of which the locking element (1) can be moved counter to the spring loading, **characterized in that** the locking element is embodied as a parking rod (1) with at least two ends (11, 12) and is mounted with a first end (11) in a housing (2) and is permanently coupled by the other end (12) to the actuating device (6-9), the parking rod (1) can be displaced in a translatory fashion essentially between the parked position and at least one second position, wherein in the second position the parking rod (1) is without positive engagement with the parking wheel (3), and the actuating device (6-9) applies to the parking rod (1) a force which can be controlled electronically in a closed-loop and/or open-loop fashion.

2. Parking lock device according to Claim 1,
**characterized in that** the two ends of the parking rod (1) are embodied with at least two diameters and the recesses in the external circumference of the parking wheel (3) are embodied as arcuate grooves (10) whose diameters are approximately complementary to the larger diameter of the parking rod (1).

3. Parking lock device according to Claim 1 or 2, **characterized in that** the parking rod (1) is a piston rod and is thus part of the actuating device, comprising a pressure cylinder (6) with a pressure sleeve (7) and a pressure disc (8), wherein the pressure disc (8) is permanently connected to the second end (12) of the parking rod (1), and a spring (5) is mounted in the pressure sleeve (7).

4. Parking lock device according to Claim 3, **characterized in that** the pressure sleeve (7) is embodied with a throttle (9).

5. Parking lock device according to Claim 3 or 4, **characterized in that** the pressure cylinder (6) is embodied as a hydraulic pressure cylinder, hydraulic pressure medium is supplied to the pressure cylinder (6) via a duct (13), the pressure in the duct (13) can rise only by means of a pressure which is necessary to displace the parking rod (1) counter to the direction of action of the spring (5), and can rise only if the engine is running and the oil pump supplies sufficient pressure, and the supply of hydraulic pressure medium to the pressure cylinder (6) can be controlled electronically in a closed-loop fashion.

6. Parking lock device according to one of the preceding claims, **characterized by** an on-board computer for electronically controlling in a closed-loop fashion the force which acts on the parking rod (1) counter to the direction of action of the spring (5).

7. Parking lock device according to one of the preceding claims, **characterized in that** the first end (11) of the parking rod (1) is embodied in the housing (2) so as to be adjustable in a manually translatory fashion by means of an eccentric bolt (14).

8. Parking lock device according to Claim 7, **characterized in that** the bolt (14) is embodied with a head (15) which can be operated only by means of a special tool.

9. Parking lock device according to Claim 7 or 8, **characterized in that** the bolt (14) can be operated from the passenger compartment of the vehicle.

## Revendications

1. Dispositif de blocage de stationnement pour la boîte de vitesses automatique d'un véhicule comprenant une roue de stationnement (3) avec des épaulements sur le pourtour extérieur, un élément de blocage (1) qui, en position de stationnement, est soumis à la contrainte d'un ressort et qui, dans cette position de stationnement, pénètre par engagement géométrique dans les épaulements (10) de la roue de stationnement et un dispositif de positionnement translatoire (6) par le biais duquel l'élément de blocage (1) peut être déplacé contre la contrainte du ressort, **caractérisé en ce que**
l'élément de blocage est réalisé sous la forme d'une barre de stationnement (1) comprenant au moins deux extrémités (11, 12) et il repose avec une première extrémité (11) dans un boîtier (2) et il est relié à demeure au dispositif de positionnement (6-9) par l'autre extrémité (12),
la barre de stationnement (1) peut coulisser par translation pour l'essentiel entre la position de stationnement et au moins une deuxième position, la barre de stationnement (1) dans la deuxième position étant sans engagement géométrique avec la roue de stationnement (3), et
le dispositif de positionnement (6-9) appliquant sur la barre de stationnement (1) une force pouvant être régulée et/ou commandée de manière électronique.

2. Dispositif de blocage de stationnement selon la revendication 1, **caractérisé en ce que** les deux extrémités de la barre de stationnement (1) sont configurées avec au moins deux diamètres et les épaulements sur le pourtour extérieur de la roue de stationnement (3) sont réalisés sous la forme de rainures voûtées (10) dont les diamètres sont approximativement complémentaires au diamètre le plus grand de la barre de stationnement (1).

3. Dispositif de blocage de stationnement selon la revendication 1 ou 2, **caractérisé en ce que** la barre de stationnement (1) est une tige de piston et fait ainsi partie intégrante du dispositif de positionnement comprenant un vérin de compression (6) avec une douille de compression (7) et une plaque de compression (8), la plaque de compression (8) étant reliée à demeure avec la deuxième extrémité (12) de la barre de stationnement (1) et un ressort (5) étant logé dans la douille de compression (7).

4. Dispositif de blocage de stationnement selon la revendication 3, **caractérisé en ce que** la douille de compression (7) est réalisée avec un étrangleur (9).

5. Dispositif de blocage de stationnement selon la revendication 3 ou 4, **caractérisé en ce que** le vérin de compression (6) est réalisé sous la forme d'un vérin de compression hydraulique, l'arrivée du fluide de pression hydraulique du vérin de compression (6) s'effectue par le biais d'un canal (13), la pression dans le canal (13) peut seulement augmenter au-dessus d'une pression nécessaire pour déplacer la barre de stationnent (1) en sens inverse de l'effet du ressort (5) lorsque le moteur tourne et la pompe à huile délivre suffisamment de pression, et l'arrivée du fluide de pression hydraulique du vérin de compression (6) peut être régulée électroniquement.

6. Dispositif de blocage de stationnement selon l'une des revendications précédentes, **caractérisé par** un ordinateur de bord pour la régulation électronique de la force agissant sur la barre de stationnement (1) en sens inverse de l'effet du ressort (5).

7. Dispositif de blocage de stationnement selon l'une des revendications précédentes, **caractérisé en ce que** la première extrémité (11) de la barre de stationnement (1) est configurée de manière à pouvoir être positionnée dans le boîtier (2) par translation manuelle par le biais d'un axe excentrique (14).

8. Dispositif de blocage de stationnement selon la revendication 7, **caractérisé en ce que** l'axe (14) est réalisé avec une tête (15) qui ne peut être actionnée qu'avec un outil spécial.

9. Dispositif de blocage de stationnement selon la revendication 7 ou 8, **caractérisé en ce que** l'axe (14) peut être actionné depuis l'habitacle du véhicule.
